# EUROPEAN PATENT APPLICATION

(11) **EP 4 261 499 A1**
(43) Date of publication of application: **18.10.2023**
(21) Application number: 21902991.5
(22) Date of filing: 07.10.2021
(51) Int. Cl.: G01C 9/00, G01C 3/06, G01S 17/42, G01S 17/89

(54) **DISTANCE MEASUREMENT DEVICE AND MOVING BODY**

(30) Priority: 11.12.2020 JP 2020206167
(71) Applicant: Panasonic Intellectual Property Management Co., Ltd., Osaka-shi, Osaka 540-6207 (JP)
(72) Inventor: NARUMI Kenji, Osaka 571-0057 (JP); HISADA Kazuya, Osaka 571-0057 (JP)
(74) Representative: Grünecker Patent- und Rechtsanwälte PartG mbB
(86) International application number: PCT/JP2021/037242
(87) International publication number: WO 2022/123887

(57) **Abstract**

A ranging apparatus includes: a main body including a light emitting device and a light detector; a signal processing circuit; a vibration detector; a control circuit. The light emitting device is capable of emitting a light beam in a plurality of directions at different elevation angles. The light detector detects reflected light of the light beam. The signal processing circuit generates distance data based on a signal outputted from the light detector. The vibration detector detects a change in attitude of the main body attributed to vibration in distinction from a change in attitude of the main body attributed to an inclination of a ground surface at a location where the main body is installed, and outputs a vibration signal indicating an amount of change in the attitude attributed to the vibration. The control circuit corrects a direction of emission of the light beam to be emitted from the light emitting device based on the vibration signal.

## Description

### Technical Field

The present disclosure relates to a ranging apparatus and a mobile body provided with a ranging apparatus.

### Background Art

A technique for adjusting a direction of emission of a laser beam in a ranging apparatus adopting LiDAR (light detection and ranging) techniques has heretofore been proposed.

For example, PTL 1 discloses a technique to provide a vehicle with a sensor for attitude detection and to adjust an irradiation angle of a laser beam from the LiDAR based on an attitude of the vehicle and an inclination of a slope located ahead.

PTL 2 discloses a system to curb an influence of vibration of an optical deflector based on data indicating the vibration that is obtained from a sensor.

### Citation List

### Patent Literature

PTL 1: Japanese Unexamined Patent Application Publication No. 2019-100853
PTL 2: Japanese Unexamined Patent Application Publication (Translation of PCT Application) No. 2019-535014

### Summary of Invention

### Technical Problem

The present disclosure provides a technique that makes it possible to detect a state of vibration of a mobile body at higher accuracy from a signal obtained from a sensor and indicating an attitude of the mobile body, and to perform ranging by emitting a light beam in an appropriate direction.

### Solution to Problem

A ranging apparatus according to an embodiment of the present disclosure includes: a main body including a light emitting device being capable of emitting a light beam in a plurality of directions at different elevation angles, and a light detector that detects reflected light of the light beam; a signal processing circuit that generates distance data based on a signal outputted from the light detector; a vibration detector that detects a change in attitude of the main body attributed to vibration in distinction from a change in attitude of the main body attributed to an inclination of a ground surface at a location where the main body is installed, and outputs a vibration signal indicating an amount of change in the attitude attributed to the vibration; and a control circuit that corrects a direction of emission of the light beam to be emitted from the light emitting device based on the vibration signal.

Comprehensive or specific aspects of the present disclosure may be realized by any one of a system, an apparatus, a method, an integrated circuit, a computer program, and a storage medium such as a computer-readable storage disk, or by any combination of a system, an apparatus, a method, an integrated circuit, a computer program, and a storage medium. Such a computer-readable storage medium can include a non-volatile storage medium as typified by a CD-ROM (compact disc-read only memory) and the like. The apparatus may be formed from one or more devices. In the case where the apparatus is formed from two or more devices, the two or more devices may be embedded in a single instrument or may be separately embedded in two or more separated instruments. In the present specification and in the appended claims, the term "apparatus" can not only mean a single apparatus, but also mean a system formed from multiple apparatuses. Advantageous Effects of Invention

According to embodiments of the present disclosure, it is possible to detect a state of vibration of a mobile body at higher accuracy from a signal obtained from a sensor and indicating an attitude of the mobile body, and to perform ranging by emitting a light beam in an appropriate direction.

### Brief Description of Drawings

[Fig. 1] Fig. 1 is a block diagram illustrating a schematic configuration of a ranging apparatus according to a first embodiment.
[Fig. 2] Fig. 2 is a diagram illustrating a configuration example of a light emitting device.
[Fig. 3] Fig. 3 is a diagram illustrating another configuration example of the light emitting device.
[Fig. 4] Fig. 4 is a diagram illustrating still another configuration example of the light emitting device.
[Fig. 5] Fig. 5 is a diagram schematically illustrating a state of mounting a ranging apparatus on a mobile body.
[Fig. 6] Fig. 6 is a diagram illustrating a configuration example of a vibration detector.
[Fig. 7] Fig. 7 is a flowchart illustrating an example of operations of the ranging apparatus.
[Fig. 8A] Fig. 8A is a first diagram for explaining correction of a direction of emission of a light beam.
[Fig. 8B] Fig. 8B is a second diagram for explaining correction of the direction of emission of the light beam.
[Fig. 8C] Fig. 8C is a third diagram for explaining correction of the direction of emission of the light beam.
[Fig. 9] Fig. 9 is a diagram illustrating an example of a change in direction of the light beam emitted from the mobile body traveling on a slope with bumps.
[Fig. 10] Fig. 10 is a diagram illustrating another example of the vibration detector.
[Fig. 11] Fig. 11 is a flowchart illustrating an example of operations to adjust a control signal.
[Fig. 12] Fig. 12 is a block diagram illustrating another configuration example of the ranging apparatus.
[Fig. 13] Fig. 13 is a diagram illustrating still another example of the vibration detector.
[Fig. 14] Fig. 14 is a diagram illustrating yet another example of the vibration detector.
[Fig. 15] Fig. 15 is a flowchart illustrating another example of a method of generating a vibration signal from an attitude signal.
[Fig. 16] Fig. 16 is a block diagram illustrating a schematic configuration of a ranging apparatus according to a second embodiment.
[Fig. 17] Fig. 17 is a flowchart illustrating operations in the second embodiment.
[Fig. 18A] Fig. 18A is a first diagram for explaining the operations in the second embodiment.
[Fig. 18B] Fig. 18B is a second diagram for explaining the operations in the second embodiment.
[Fig. 18C] Fig. 18C is a third diagram for explaining the operations in the second embodiment.
[Fig. 19] Fig. 19 is a block diagram illustrating a schematic configuration of a ranging apparatus according to a third embodiment.
[Fig. 20A] Fig. 20A is a graph depicting an example of a temporal change in rotational angular velocity in a pitch direction of a mobile body in the course of traveling.
[Fig. 20B] Fig. 20B is a graph depicting an example of a temporal change in pitch angle of the mobile body in the course of traveling.
[Fig. 20C] Fig. 20C is a graph depicting frequency spectra of respective sections illustrated in Fig. 20B.
[Fig. 20D] Fig. 20D is a graph depicting a result of obtaining an inclination signal by passing the attitude signal through a low-pass filter.
[Fig. 20E] Fig. 20E is a graph depicting a result of obtaining the vibration signal by subtracting the inclination signal from the attitude signal.
[Fig. 21A] Fig. 21A is a diagram illustrating an example in which a light beam is emitted in a fixed direction relative to a mobile body irrespective of an attitude of the mobile body.
[Fig. 21B] Fig. 21B is a diagram illustrating an example in which a direction of emission of the light beam is corrected based on an attitude signal.

### Description of Embodiments

In the present disclosure, all or part of circuits, units, apparatuses, members or portions, or all or part of functional blocks in block diagrams can be implemented by one or more electronic circuits including semiconductor devices, semiconductor integrated circuits (IC), or LSI (large scale integration), for example. The LSI or the IC may be integrated into one chip or formed by a combination of multiple chips. For example, functional blocks other than a storage device may be integrated into one chip. Although it is referred to as the LSI or the IC herein, the name may be changed according to the degree of integration thereof, and a device called system LSI, VLSI (very large scale integration), or ULSI (ultra large scale integration) is also acceptable. A field programmable gate array (FPGA) to be programmed after manufacturing the LSI, or a reconfigurable logic device that enables reconfiguration of junction relations inside the LSI or set-up of circuit compartments inside the LSI can also be used for the same purpose.

In addition, functions or operations of all or part of the circuits, the units, the members or the portions can be executed by software processing. In this case, the software is stored in non-transitory storage media such as one or more ROMs, optical disks, and hard disk drives. When the software is executed by a processor, a function specified by the software is executed by the processor and a peripheral device. A system or an apparatus may include one or more non-transitory storage media storing the software, the processor, and a required hardware device such as an interface.

### (Knowledge forming basis of present disclosure)

Prior to describing embodiments of the present disclosure, knowledge forming the basis of the present disclosure will be described.

A mobile body capable of autonomous traveling such as an automated guided vehicle (AGV) is widely used for use in transporting items in a warehouse or a facility. Such a mobile body can mount various apparatuses including a ranging apparatus for self-localization, a ranging apparatus for item detection, a sensor for attitude detection, and the like. A GNSS (global navigation satellite system) receiver that performs ranging by receiving signal transmitted from a GNSS satellite such as GPS (global positioning system) can be used as such a ranging apparatus. As for a different ranging apparatus, there is also a ranging apparatus that performs ranging while using SLAM (simultaneous localization and mapping) technique, for example. The ranging apparatus using the SLAM technique performs self-localization by checking a signal outputted form a LiDAR sensor against map data prepared in advance. The LiDAR sensor can also be used as the ranging apparatus for item detection. The ranging apparatus can generate range image data or three-dimensional point cloud data to indicate distribution of objects present in an environment where the mobile body travels. Based on these data, it is possible to generate map data in the traveling environment and to perform an action to detect and dodge an obstacle in the course of traveling. Regarding the sensor for attitude detection, an acceleration sensor, a gyroscope, or an inertial measurement unit (IMU) provided with these devices can be used, for example.

The attitude of the mobile body can be expressed by using a pitch angle, a roll angle, and a yaw angle, for example. The pitch angle represents an amount of rotation around an axis in a right-left direction of the mobile body. The roll angle represents an amount of rotation around an axis in a front-rear direction of the mobile body. The yaw angle represents an amount of rotation around an axis in an up-down direction of the mobile body. The attitude can also be defined by other angles such as Euler angles. In the case of detecting the pitch angle, the roll angle, and the yaw angle, the sensor for attitude detection includes at least one of a triaxial acceleration sensor and a gyroscope. The triaxial acceleration sensor measures respective accelerations in the x, y, and z directions in the xyz coordinate system fixed to the mobile body. The attitude of the mobile body can be calculated from measurement values of these accelerations. The gyroscope measures respective rotational angular velocities in the yaw, pitch, and roll directions of the mobile body. The attitude of the mobile body can be calculated from measurement values of these rotational angular velocities. The sensor for detecting the attitude generates and outputs signals indicating the attitude of the mobile body repeatedly in a predetermined cycle, for instance, in the course of movement of the mobile body.

In the following description, the sensor for detecting the attitude will be referred to as an "attitude sensor" and a signal to be outputted from the attitude sensor will be referred to as an "attitude signal". The attitude signal indicates an amount of change in attitude relative to a reference attitude. The reference attitude can be an attitude when the mobile body provided with the attitude sensor stands still on a horizontal ground surface (also referred to as a road surface), for example. In the case where the attitude is expressed by the pitch angle, the roll angle, and the yaw angle, the attitude signal will represent those angles. The attitude signal may represent only a portion of the pitch angle, the roll angle, and the yaw angle.

A conventional mobile body such as an AGV is configured to travel on an indoor flat floor surface mainly in a warehouse, a factory, and the like. It is desirable to make the mobile body possible to travel outdoors such as a passageway between warehouses, between a warehouse and a factory or the like, for example, in order to expand an application range of the mobile body. However, locations that may hinder autonomous traveling such as slopes, bumps and steps may exist outdoors. For this reason, it is difficult to drive the mobile body such as the AGV outdoors normally. In a case where a mobile body that moves while performing ranging by use of a light beam travels along the ground surface having bumps or steps, a direction of emission of the light beam may change in unexpected directions due to vibration. As a consequence, a failure to perform appropriate ranging may lead to erroneous self-localization or a collision with an obstacle, for example. A thinkable method for solving this problem is to correct the direction of emission of the light beam depending on the change in attitude of the mobile body detected with the attitude sensor, for example. However, the above-mentioned method cannot distinguish between a change in attitude due to an inclination of the ground surface and a change in attitude due to the vibration, and it is difficult to normally travel on an inclined surface having bumps or steps, for example.

The attitude signal to be outputted from the attitude sensor is a composite of a signal component indicating an amount of change in attitude attributed to the inclination of the ground surface (hereinafter referred to as an "inclination component") and a signal component indicating an amount of change in attitude attributed to the vibration of the mobile body (hereinafter referred to as a "vibration component"). Assuming that the vibration originating from the mobile body itself is small enough, in a case where the mobile body travels at a constant velocity (or stands still) on the completely flat ground surface without bumps, the attitude signal does not contain the vibration component but contains the inclination component only. On the other hand, in a case where the mobile body travels at a constant velocity on a bumpy road surface that is completely horizontal from a macroscopic perspective, the attitude signal does not contain the inclination component but contains the vibration component only. Since there is an inclined surface with bumps in an actual environment, the attitude signal is generally a signal formed by mixing the inclination component with a signal component. In the case where the mobile body travels on the road surface with bumps and including both an inclined location and a horizontal location, it is not possible to appropriately correct a deviation of the direction of emission attributed to the vibration of the mobile body even when the direction of emission of the light beam is adjusted by using the attitude signal.

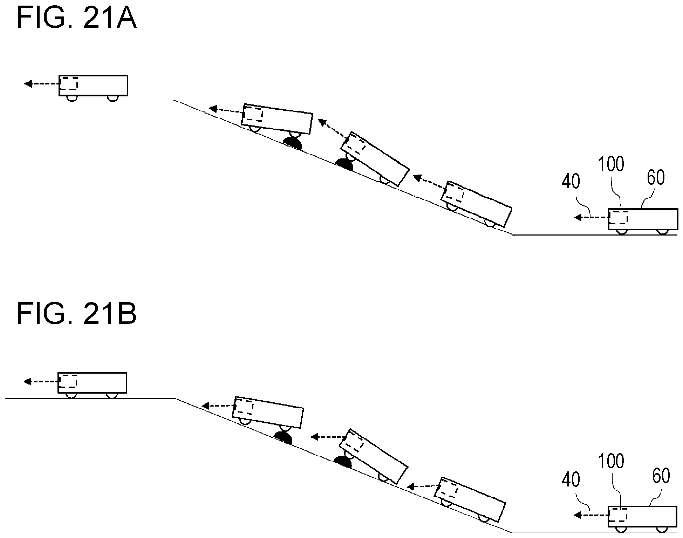

This problem will be more specifically described below with reference to Figs. 21A and 21B. Figs. 21A and 21B schematically illustrate an example of an aspect of a mobile body 60 provided with a ranging apparatus 100 traveling on a road surface including a slope with bumps. The mobile body 60 is an AGV, which performs autonomous traveling along a preset route, for example. The ranging apparatus 100 includes a light source that emits a light beam 40 such as a laser beam, and a light detector. The ranging apparatus 100 travels while measuring a distance to an object that is present ahead by using a ranging technique such as ToF (time of flight) and FMCW (frequency modulated continuous wave). The ranging apparatus 100 repeatedly measures distances to a reflection point while performing beam scanning designed to change a direction of emission of the light beam 40 within a preset range, for example. In the illustrated example, the mobile body 10 sequentially travels on a horizontal road surface, a bumpy uphill inclined surface, and another horizontal slope.

Fig. 21A illustrates an example of a case where the light beam 40 is emitted in a fixed direction relative to the mobile body 60 irrespective of an attitude of the mobile body 60. In the example illustrated in Fig. 21A, the light beam 40 is always emitted in a head-on direction viewed from the mobile body 60. Note that the light beam 40 is also emitted in a direction other than the head-on direction in a case where beam scanning is carried out. In this case, the light beam 40 is emitted in an appropriate direction toward an object on the road surface regardless of whether the road surface is horizontal or inclined but on the condition that the road surface is not bumpy. However, if the vibration is generated as a consequence of travel of the mobile body 60 on a bumpy portion of the road surface, the light beam 40 may be emitted in a direction close to the road surface or into the air. In that case, there is a risk of a failure to appropriately irradiate the object that is present ahead.

On the other hand, Fig. 21B illustrates an example of a case in which the direction of emission of the light beam 40 is corrected based on the attitude signal. In this example, a condition of the inclined surface where the mobile body 60 is installed is not taken into account, and the direction of emission of the light beam 40 is corrected in such a way as to cancel out the change in attitude on the assumption that all the change in attitude of the mobile body 60 is attributed to the vibration. In this case, the direction of emission of the light beam 40 or a range of the direction of emission in the case where scanning takes place is fixed relative to a direction of gravitational force. In other words, even in the case where the mobile body 60 is traveling on the inclined surface, the direction of emission is corrected such that the direction of the light beam 40 is always the same direction when viewed from an observer outside of the mobile body 60. In the example of Fig. 21B, the light beam 40 is always emitted in a direction parallel to a horizontal plane. In this case, the light beam is emitted in the direction parallel to the road surface as long as the road surface is horizontal irrespective of the presence of bumps on the road surface. However, in the case where the mobile body 60 travels on the inclined surface, the light beam is emitted toward the load surface on an uphill inclined surface or emitted into the air on a downhill inclined surface. Accordingly, there is a risk of a failure to appropriately irradiate the object that is present ahead.

In order to solve the above-mentioned problems, the inventors have conceived of configurations of embodiments of the present disclosure to be described below. A ranging apparatus according to an embodiment of the present disclosure detects a change in attitude attributed to vibration in distinction from a change in attitude attributed to an inclination of the ground surface, and corrects a direction of emission of a light beam based on an amount of change in attitude attributed to the vibration. This makes it possible to carry out ranging appropriately on an inclined surface including bumps, steps, or the like.

Outlines of embodiments of the present disclosure will be described below.

A ranging apparatus according to an exemplary embodiment of the present disclosure includes a main body provided with a light emitting device and a light detector, a signal processing circuit, a signal detector, and a control circuit. The light emitting device is capable of emitting a light beam in multiple directions at different elevation angles. The light detector detects reflected light of the light beam. The signal processing circuit generates distance data based on a signal outputted from the light detector. The vibration detector detects a change in attitude of the main body attributed to vibration in distinction from a change in attitude of the main body attributed to an inclination of a ground surface at a location where the main body is installed, and outputs a vibration signal indicating an amount of change in the attitude attributed to the vibration. The control circuit corrects a direction of emission of the light beam to be emitted from the light emitting device based on the vibration detector and the vibration signal.

According to the above-described configuration, the vibration detector detects the change in attitude of the main body attributed to the vibration in distinction from the change in attitude of the main body attributed to the inclination of the ground surface at the location where the main body is installed, and outputs the vibration signal indicating the amount of change in the attitude attributed to the vibration. The control circuit corrects the direction of emission of the light beam to be emitted from the light emitting device based on the vibration detector and the vibration signal. The above-described configuration makes it possible to emit the light beam in an appropriate direction and to perform ranging appropriately even on an inclined surface containing bumps and steps, for example.

The light emitting device may include a light source that emits the light beam, and an actuator that changes the direction of emission of the light beam. The control circuit may correct the direction of emission of the light beam by controlling the actuator based on the vibration signal.

The vibration detector may include an attitude sensor that outputs an attitude signal indicating a variation with time of an attitude of the main body, and an arithmetic circuit that generates the vibration signal by removing a component of the change in the attitude attributed to the inclination of the ground surface from the attitude signal.

The arithmetic circuit may generate the vibration signal by extracting a high-frequency component being higher than a preset cutoff frequency from the attitude signal.

The arithmetic circuit may generate the vibration signal by carrying out low-pass filtering processing to extract a low-frequency component being lower than the cutoff frequency from the attitude signal, and processing to remove the low-frequency component from the attitude signal.

The cutoff frequency may be included in a range from 0.1 Hz and 10 Hz, for example.

The control circuit temporarily may stop correction of the direction of emission of the light beam in a case where magnitude of the vibration signal exceeds a preset range.

The ranging apparatus may further include: a positioning device that estimates a location of the ranging apparatus; and a storage device that stores relation data that defines a correlation between the location of the ranging apparatus and an inclination angle of the ground surface. The arithmetic circuit may refer to the relation data and specifies the inclination angle of the ground surface from the location estimated by the positioning device, may determine an amount of change in the attitude of the main body attributed to the inclination of the ground surface based on the inclination angle, and may generate the vibration signal by subtracting the amount of change in the attitude of the main body attributed to the inclination of the ground surface from the attitude signal.

The control circuit may temporarily stop correction of the direction of emission of the light beam in a case where the location estimated by the positioning device is included in a specific zone.

The ranging apparatus may be mounted on a mobile body, for example. The vibration detector may further include a velocity sensor that measures a moving velocity of the mobile body. The arithmetic circuit may determine the component of the change in the attitude attributed to the inclination of the ground surface based on the measured moving velocity.

The ranging apparatus may be mounted on a mobile body driven by an electric motor, for example. The vibration detector may further include a torque sensor that measures torque of the electric motor. The arithmetic circuit determines the component of the change in the attitude attributed to the inclination of the ground surface based on the measured torque.

The arithmetic circuit may perform processing while considering that there is no change in the attitude attributed to the vibration in a case where an amount of change in the attitude signal in a certain period exceeds a threshold and varies while having a tendency of any of a monotonous increase and a monotonous decrease.

The ranging apparatus may further include: a height sensor that detects a change in height of the main body from the ground surface, and outputs a height change signal that indicates an amount of change in the height relative to a reference value. The control circuit may determine an amount of correction of the direction of emission of the light beam based on the vibration signal and the height change signal.

The ranging apparatus may further include an image sensor that shoots a scene including a direction in which the light beam is emitted. The control circuit may recognize at least one target object included in the scene based on an image obtained by the image sensor, and may determine the direction of emission of the light beam so as to irradiate the at least one target object with the light beam.

A mobile body according to another embodiment of the present disclosure includes the ranging apparatus according to the embodiment of the present disclosure.

A computer program according to still another embodiment of the present disclosure is used in a ranging apparatus provided with a light emitting device being capable of emitting a light beam in a plurality of directions at different elevation angles, and a light detector that detects reflected light of the light beam. The computer program causes a computer in the ranging apparatus to execute: generating distance data based on a signal outputted from the light detector; detecting a change in attitude of the ranging apparatus attributed to vibration in distinction from a change in attitude of the main body attributed to an inclination of a ground surface at a location where the ranging apparatus is installed, and outputting a vibration signal indicating an amount of change in the attitude attributed to the vibration; and correcting a direction of emission of the light beam to be emitted from the light emitting device based on the vibration signal.

Embodiments of the present disclosure will be more specifically described below. Each of the embodiments to be described below represents a comprehensive or specific example. Numerical values, shapes, materials, constituents, layouts and modes of connection of the constituents, steps, and the order of the steps discussed in the following embodiments are mere examples and are not intended to limit the techniques of the present disclosure. Of the constituents of the following embodiments, a constituent that is not described in an independent claim to represent the most generic concept will be described as an optional constituent. The respective drawings are schematic drawings which are not always precisely depicted. Moreover, in the respective drawings, substantially identical or similar constituents are denoted by the same reference signs. Overlapping explanations may be omitted or simplified as appropriate.

### (First Embodiment)

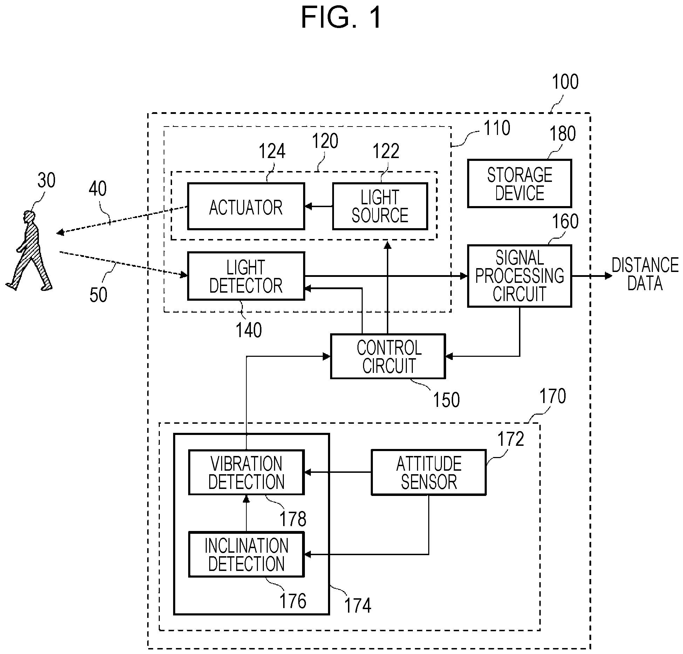

Fig. 1 is a block diagram illustrating a schematic configuration of a ranging apparatus 100 according to an exemplary first embodiment of the present disclosure. The ranging apparatus 100 of the present embodiment is used while being mounted on a mobile body such as an AGV. This ranging apparatus 100 includes a main body 110, a control circuit 150, a signal processing circuit 160, a vibration detector 170, and a storage device 180. The main body 110 includes a light emitting device 120 and a light detector 140. The vibration detector 170 includes an attitude sensor 172 and an arithmetic circuit 174.

The light emitting device 120 includes a light source 122 and an actuator 124. The light emitting device 120 can emit a light beam in multiple directions at different elevation angles by the action of the actuator 124. An "elevation angle" is an angle with respect to a horizontal plane in the case where the assumption is made that the mobile body is placed on the horizontal ground surface. In the case where the mobile body is placed on an inclined surface, the elevation angle is an angle that employs a flat plane including a direction of movement of the mobile body and a right-left direction as a reference plane. An angle on an upper side with respect to the horizontal plane or the reference plane may be referred to as a "positive elevation angle" while an angle on a lower side with respect to the horizontal plane may be referred to as a "negative elevation angle" or a "depression angle" as appropriate.

The light source 122 is a laser light source, for example, which emits a laser beam. A shape of a spot of the laser beam may be a shape close to a circle or a line shape. The light source 122 may include a semiconductor laser element, and a lens for collimating the laser beam emitted from the semiconductor laser element.

A wavelength of the laser beam emitted from the light source 122 can be a wavelength included in a near infrared wavelength range (about 700 nm to 2.5 µm), for example. The wavelength to be used depends on a material of a photoelectric conversion element employed in the light detector 140. A wavelength around 900 nm can be mainly used in the case of employing silicon (Si) as the material of the photoelectric conversion element, for example. A wavelength in equal to or above 1000 nm and equal to or below 1650 nm, for example, can be mainly used in the case of employing indium gallium arsenide (InGaAs) as the material of the photoelectric conversion element. Note that the wavelength of the laser beam is not limited to a wavelength range of the near infrared light. A wavelength included in a visible range (about 400 nm to 700 nm) may be used for an application (such as night use) in which an influence of environmental light is not problematic. Depending on the application, it is also possible to use an ultraviolet wavelength range. In the present specification, overall radiations included in the ultraviolet, visible light, and infrared wavelength ranges will be referred to as the "light".

The actuator 124 adds an optical action such as refraction and/or reflection to the laser beam emitted from the light source 122, thereby emitting the laser beam in a specific direction. The actuator 124 can change the direction of emission of the laser beam within a predetermined range in response to a control signal from the control circuit 150. The actuator 124 can include one or more electric motors and one or more mirrors connected to the electric motors. The direction of emission of the laser beam can be changed by driving the motors and thus rotating the mirrors.

The light detector 140 detects reflected light 50 generated by the light beam 40 emitted from the light emitting device 120. The reflected light 50 is a component of the light included in the light beam 40, the component being reflected from a target object 30 and returning to the ranging apparatus 100. The light detector 140 includes one or more photoelectric conversion elements such as an avalanche photodiode (APD). The light detector 140 may be a sensor provided with multiple photoelectric conversion elements, such as an image sensor. The image sensor includes multiple photoelectric conversion elements that are one-dimensionally or two-dimensionally arranged. Each photoelectric conversion element outputs an electric signal corresponding to an amount of received light. By using the image sensor, it is possible to generate range image data that indicates two-dimensional distribution of distances. In the following description, the image data may be simply referred to as an "image" as appropriate.

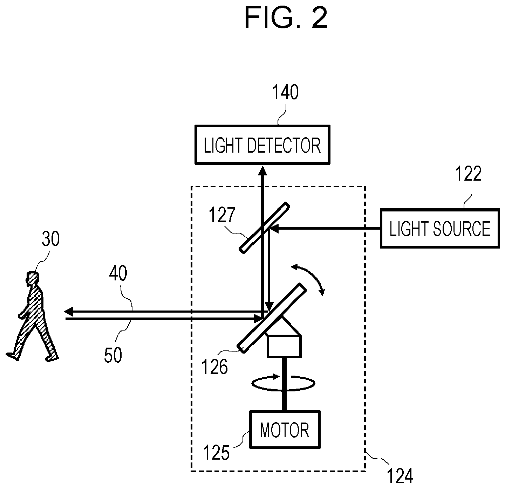

Fig. 2 is a diagram illustrating a configuration example of the light source 122, the actuator 124, and the light detector 140. The actuator 124 in this example includes a motor 125, a mirror 126 connected to the motor 125 and thereby rotated, and a half mirror 127. The mirror 126 can be rotated around two axes by using the motor 125 and another motor which is not illustrated. The half mirror 127 is located on a light path of the laser beam emitted from the light source 122, and reflects the laser beam so as to be incident on the mirror 126. The laser beam reflected from the mirror 126 irradiates the target object 30 as the light beam 40. The light beam 40 reflected from the target object 30 returns to the mirror 126 as the reflected light 50, and is then reflected and directed to the half mirror 127. The half mirror 127 passes through the reflected light 50 reflected from the mirror 126, and makes the reflected light 50 incident on the light detector 140. The actuator 124 changes an angle of the mirror 126 in response to the control signal inputted from the control circuit 150. Thus, it is possible to change the light beam 40 within the predetermined range.

The actuator 124 may have a structure different from that in Fig. 2. For example, the actuator 124 may include a Galvano mirror or a MEMS mirror configured to realize a function similar to the above.

Instead of the actuator 124, the light emitting device 120 may include an optical device such as a phased array and an optical scanning device that is provided with a slow light structure, which can change the direction of emission of the laser beam without any mechanical moving parts. The optical device without mechanical moving parts is not influenced by the inertia, and therefore has an advantage of a capability of correcting the direction of emission rapidly in the case of the occurrence of vibration.

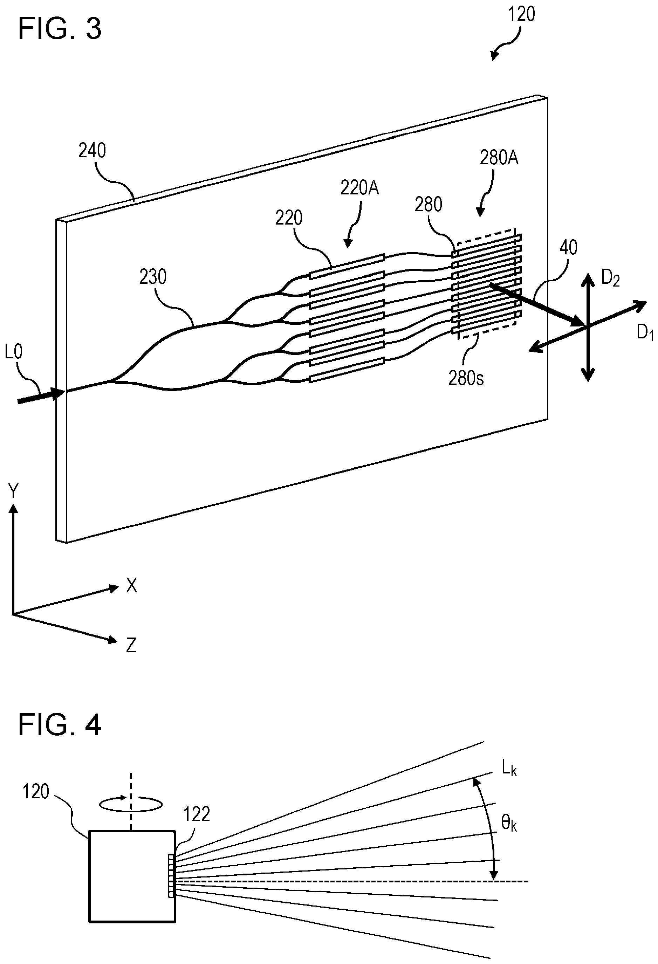

Fig. 3 is a perspective view diagram schematically illustrating a configuration example in a case where the light emitting device 120 is an optical scanning device provided with the slow light structure. Fig. 3 illustrates x axis, y axis, and z axis that are orthogonal to one another. This light emitting device 120 includes an optical waveguide array 280A, a phase shifter array 220A, a light splitter 230, and a substrate 240 integrating these constituents together. The optical waveguide array 280A includes multiple optical waveguide elements 280 arranged in y direction. Each optical waveguide element 280 is provided with a structure extending in x direction. The phase shifter array 220A includes multiple phase shifters 220 arranged in the y direction. Each phase shifter 220 is provided with an optical waveguide extending in the x direction. The multiple optical waveguide elements 280 in the optical waveguide array 280A are connected to the multiple phase shifters 220 in the phase shifter array 220A, respectively. The light splitter 230 is connected to the phase shifter array 220A.

A laser beam L0 emitted from the light source 122 is inputted to the multiple phase shifters 20 through the light splitter 230. Light components having passed through the multiple phase shifters 220 are inputted to the multiple optical waveguide elements 280, respectively, in a state of the phases each being shifted by a constant amount in the y direction. The light components inputted to the multiple optical waveguide elements 280, respectively, are emitted in a direction intersecting with a light emission surface 280s that is parallel to xy plane, while being propagated inside the optical waveguide elements 280 along the x direction.

Each optical waveguide element 280 includes a pair of mirrors opposed to each other, and a liquid crystal layer located between those mirrors. The liquid crystal layer is located between a pair of electrodes being parallel to the mirrors, for example. Each mirror is a multilayered reflection film, and at least the mirror on the light emission surface 280s side has translucency. The light inputted to the liquid crystal layer is propagated inside the liquid crystal layer along the x direction while being reflected from the pair of mirrors. A portion of the light propagated through the liquid crystal layer passes through the mirror on the light emission surface 280s side having the translucency, and is emitted to the outside. By changing a voltage to be applied to the pair of electrodes, a refraction index of the liquid crystal layer is changed, and the direction of the light emitted from the optical waveguide element 280 to the outside is thereby changed. In response to the change in voltage, the direction of the light beam 40 to be emitted from the optical waveguide array 280A can be changed along a direction D1 that is parallel to the x axis.

Each phase shifter 220 includes a total reflection waveguide containing a thermo-optical material of which refractive index is varies with heat, for example, a heater thermally coming into contact with the total reflection waveguide, and a pair of electrodes for applying a driving voltage to the heater. The light inputted to the total reflection waveguide is propagated along the x direction while being totally reflected inside the total reflection waveguide. By applying the voltage to the pair of electrodes, the total reflection waveguide is heated with the heater. As a consequence, the refractive index of the total reflection waveguide is changed and the phase of the light to be emitted from an end of the total reflection waveguide is changed. By changing a phase difference between the light components outputted from two adjacent phase shifters 220, it is possible to change the direction of emission of the light beam 40 along a direction D2 that is parallel to the y axis.

According to the above-described configuration, the light emitting device 120 can change the direction of emission of the light beam 40 two-dimensionally. Details of the operation principle, operating methods, and the like of the light emitting device 120 as mentioned above are disclosed in US Patent Application Publication No. 2018/0217258, for example. The entire contents disclosed in this document will be incorporated in the present application by reference.

In each of the examples described above, the beam scanning is realized by changing the direction of emission of the light beam 40, which is emitted from the single light source, along the two directions that are orthogonal to each other. Without limitation to the above-described configuration, the same function may be realized by using multiple light sources. For example, a light emitting device 120 as illustrated in Fig. 4 may be used.

Fig. 4 is a diagram schematically illustrating an example of the light emitting device 120 including multiple light sources 122 arranged in a vertical direction. Radially extending straight lines illustrated in Fig. 4 schematically represent center axes of laser beams emitted from the respective light sources 122. For the purpose of simplification, only the center axes of the laser beams are illustrated in Fig. 4 while disregarding the spread of the laser beams. In this example, the laser beams are emitted at different elevation angles from one another out of the multiple light sources 122 arranged in the vertical direction. Fig. 4 illustrates an elevation angle θₖ of a k-th laser beam Lₖ as an example. The light emitting device 120 in this example includes multiple light detectors that detect reflected light of the laser beams emitted from the multiple light sources 122, respectively. The light sources 122 and the light detectors are connected to a motor and configured to be rotated around a rotating axis indicated with a dashed line in Fig. 4. The control circuit 150 can select the light source 122 to emit the laser beam out of the multiple light sources 122. The control circuit 150 can correct the direction of emission of the laser beam depending on a state of vibration by switching the light source 122 to emit the laser beam depending on the state of vibration of the ranging apparatus 100. Moreover, the control circuit 150 can also correct the direction of emission of the laser beam depending on the state of vibration by changing the elevation angle of the direction of emission of the laser beam while changing the attitude of the light emitting device 120 itself depending on the state of vibration of the ranging apparatus 100.

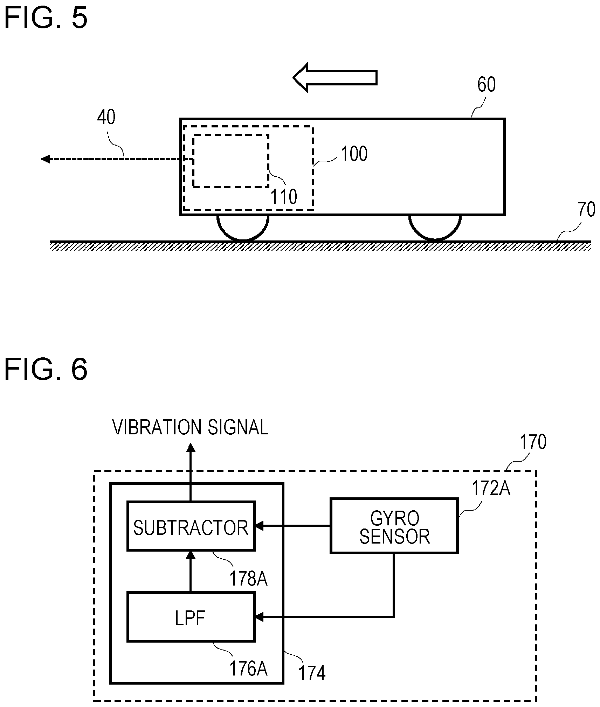

Fig. 5 is a diagram schematically illustrating a state of mounting the ranging apparatus 100 of the present embodiment on the mobile body 60. The mobile body 60 is a vehicle capable of autonomous traveling such the AGV. The mobile body 60 travels on a road surface 70 in a direction of an arrow in Fig. 5. In a case of ranging an object (such as a person or an obstacle) present ahead of the mobile body 60, the main body 110 is mounted on a front part of the mobile body 60, and the light beam 40 is emitted forward of the mobile body 60. The ranging apparatus 100 can be used as part of a LiDAR system mounted on the mobile body 60.

Referring to Fig. 1 again, a description will be given of configurations of the control circuit 150, the signal processing circuit 160, and the vibration detector 170.

The control circuit 150 is the circuit that controls the light emitting device 120 and the light detector 140. The control circuit 150 can be a processor such as a central processing unit (CPU), or an integrated circuit such as a microcontroller that embeds the processor. The control circuit 150 executes operations to be described later by causing the processor to execute a computer program stored in the storage device 180, for example. The control circuit 150 controls timing of light emission from the light source 122, an action of the actuator 124, and timing of light detection by the light detector 140. The control circuit 150 can include a circuit to drive the light source 122, a circuit to drive the actuator 124, and a circuit to drive the light detector 140. The control circuit 150 determines the direction of emission of the light beam 40 based on signals outputted from the signal processing circuit 160 and the vibration detector 170, and controls the actuator 124 in such a way as to emit the light beam 40 in that direction. For example, the control circuit 150 may detect a specific target object 30 such as a person based on distance data outputted from the signal processing circuit 160, and control the actuator 124 in such a way as to emit the light beam 40 in the direction of the target object 30. Meanwhile, the control circuit 150 corrects the direction of emission of the light beam 40 in such a way as to reduce an influence of a change in attitude attributed to vibration based on a vibration signal outputted from the vibration detector 170. Details of this correcting operation will be described later.

The signal processing circuit 160 is a circuit that generates the distance data based on an electric signal outputted from the light detector 140. The signal processing circuit 160 is the circuit that includes a processor such as a digital signal processor (DSP). The signal processing circuit 160 executes processing to be described below by causing the processor to execute a computer program stored in the storage device 180. Based on the signal outputted from the light detector 140, the signal processing circuit 160 generates and outputs the distance data that indicates distances to one or more target objects 30 irradiated with the light beam 40. An arbitrary ranging technique such as direct ToF, indirect TOF, and FMCW can be used for generating the distance data. In the case of using the direct ToF method, for example, the signal processing circuit 160 measures time from emission of the light beam 40 to detection of the reflected light 50 with the light detector 140, and calculates the distance to the target object 30 from the time and the speed of light.

In the present disclosure, the "distance data" means data in an arbitrary format which represents an absolute distance to one or more measurement points (also referred to as reflection points) irradiated with the light beam 40, or a relative depth between the measurement points. The distance data may be range image data indicating two-dimensional distribution of distances, or a three-dimensional point cloud data, for example. Meanwhile, the distance data is not limited only to data that directly represents the distance or the depth, but may instead be data used for calculating the distance or the depth.

The vibration detector 170 is a device to detect the vibration of the main body 110 of the ranging apparatus 100. The main body 110 is fixed to the mobile body 60. For this reason, the vibration detector 170 can detect the state of vibration of the mobile body 60. The vibration detector 170 of the present embodiment includes the attitude sensor 172 and the arithmetic circuit 174.

The attitude sensor 172 can be an acceleration sensor or an inertial sensor provided with a gyroscope. The attitude sensor 172 may be the inertial measurement unit (IMU) that incorporates a triaxial acceleration sensor and a gyroscope. The attitude sensor 172 is fixed to the main body 110 of the ranging apparatus 100 or to the inside of the mobile body 60 on which the main body 110 is mounted. The attitude sensor 172 measures an amount of change in attitude of the main body 110 or the mobile body 60 from a reference attitude, and outputs an attitude signal that indicates a variation with time of the amount of change in the attitude. The attitude signal may be an analog electric signal or digital data.

The attitude sensor 172 is not limited only to the inertial sensor but may include an image sensor, for example. In that case, the attitude sensor 172 generates the attitude signal based on a variation with time of an image obtained with the image sensor. For instance, the attitude signal can be generated by calculating how much and which rotational direction the main body 110 is changed by using a variation with time of locations of multiple characteristic points in the image. Here, in the case of using the image processor as the light detector 140, the attitude signal may be generated based on an image obtained by the image sensor.

The arithmetic circuit 174 is a circuit that includes one or more processors, for example. The arithmetic circuit 174 includes an inclination detection module 176 and a vibration detection module 178. These modules may be hardware modules or software modules. The arithmetic circuit 174 may function as the inclination detection module 176 and the vibration detection module 178 by causing the processor to execute a program stored in the storage device 180.

The inclination detection module 176 extracts a component of a change in attitude generated due to the inclination of the ground surface from the attitude signal outputted from the attitude sensor 172, and outputs a signal indicating the component as an inclination signal. Although the inclination signal is generated based on the attitude signal in the present embodiment, the inclination signal may be generated independently of the attitude signal as in another embodiment to be described later.

The vibration detection module 178 extracts a component generated due to the vibration from the attitude signal outputted from the attitude sensor 172, and generates a signal indicating the component as a vibration signal. In the present embodiment, the vibration detection module 178 generates the vibration signal by subtracting the inclination signal from the attitude signal. The vibration detection module 178 sends out the generated vibration signal to the control circuit 150. The control circuit 150 controls the actuator 124 in such a way as to cancel out the change in direction of emission of the light beam 40 attributed to the vibration of the main body 110. Thus, the direction of emission of the light beam 40 is corrected.

The storage device 180 is a device that includes at least one storage medium. The storage medium can be an arbitrary storage medium as typified by a memory such as a RAM and a ROM, a magnetic storage medium, an optical storage medium, and the like. The computer programs to be executed by the processors in the control circuit 150, the signal processing circuit 160, and the arithmetic circuit 174 as well as various data generated in the course of the processing can be stored in the storage device 180.

Although the control circuit 150, the signal processing circuit 160, and the arithmetic circuit 174 are individual circuits that are separated from one another, two or all of these circuits may be realized by one integrated circuit. In the meantime, each of the control circuit 150, the signal processing circuit 160, and the arithmetic circuit 174 may be an aggregate of multiple circuits. Part of functions of the control circuit 150, the signal processing circuit 160, and the arithmetic circuit 174 may be implemented by an external computer installed at a location away from the main body 110 or the ranging apparatus 100 or from the mobile body 60. In this case, the external computer carries out transmission and reception of data to and from the computer in the ranging apparatus 100 by wireless communication or wired communication. As described above, part of the constituents of the ranging apparatus 100 need not be mounted on the mobile body 60.

Fig. 6 is a diagram illustrating a more specific configuration example of the vibration detector 170. The vibration detector 170 of this example includes a gyro sensor 172A as the attitude sensor 172. The arithmetic circuit 174 includes a low-pass filter (LPF) 176A as the inclination detection module 176, and includes a subtractor 178A as the vibration detection module 178. The gyro sensor 172A includes a gyroscope and a circuit that processes a signal outputted from the gyroscope. The gyro sensor 172A generates the attitude signal that indicates the amount of change in attitude of the main body 110 based on the signal outputted from the gyroscope and indicating a rotational angular velocity. The low-pass filter 176A extracts a low-frequency component from the attitude signal, and outputs the component as the inclination signal. The subtractor 178A generates the vibration signal deprived of the low-frequency component by subtracting the inclination signal from the attitude signal.

A description will be given below of operations of the ranging apparatus 100 in the case where the vibration detector 170 is provided with the configuration illustrated in Fig. 6.

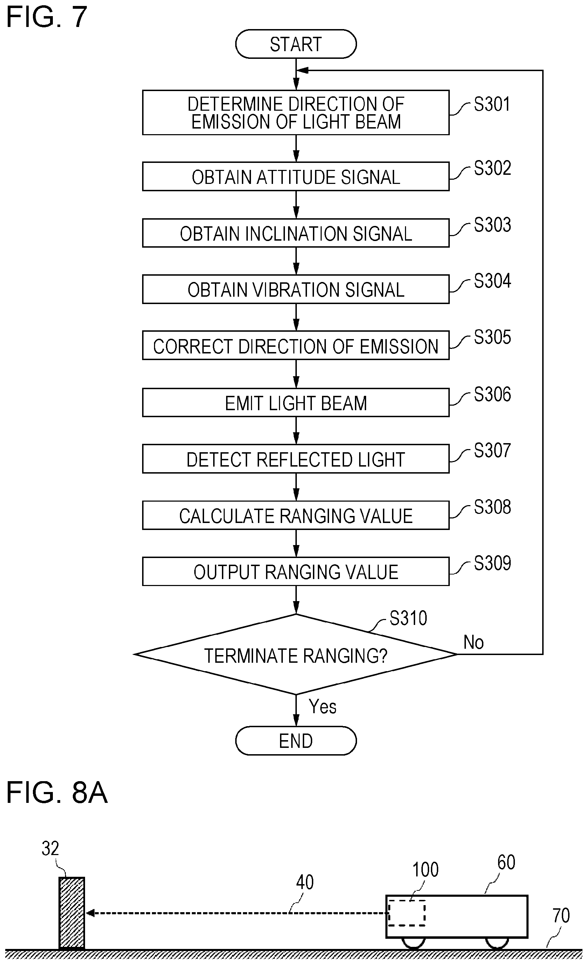

Fig. 7 is a flowchart illustrating an example of operations of the ranging apparatus 100. While the mobile body 60 is traveling, the ranging apparatus 100 generates ranging data by repeating operations from steps S301 to S310 illustrated in Fig. 7 in a predetermined cycle, for example. The operations of the respective steps will be described below.

### (Step S301)

The control circuit 150 determines the direction of emission of the light beam, and sends out the control signal to indicate the direction of emission to the actuator 124. The control signal defines an emission angle of the light beam. The control signal may indicate an elevation angle and an azimuth angle while using a frontal direction of the mobile body 60 as a reference, for example, or may indicate control parameters corresponding to those angles. Based on the control signal, the actuator 124 sets parameters to determine the direction of emission such as a rotational angle of a mirror. The control circuit 150 may change the direction of emission of the light beam in each measurement so as to scan a scene of a ranging target with the light beam.

### (Step S302)

The gyro sensor 172A generates the attitude signal that indicates the amount of change in attitude of the main body 110. Since a measurement value obtained by the gyroscope is a value of a rotational angular velocity, the gyro sensor 172A calculates an attitude angle value by carrying out integral calculation. In the present embodiment, the gyro sensor 172A calculates the pitch angle out of the three angles of the pitch angle, the roll angle, and the yaw angle. Thus, it is possible to detect a change in attitude around an axis in the right-left direction relative to a direction of travel of the mobile body 60. The gyro sensor 172A outputs this pitch angle as the attitude signal. Here, the gyro sensor 172A may calculate the roll angle or the yaw angle in addition to the pitch angle or instead of the pitch angle. The roll angle represents an amount of change in attitude around an axis in the direction of travel of the mobile body 60. By using the roll angle as the attitude signal, it is possible to detect a state where there occurs a difference in height between right and left wheels such as in a case where one of the right and left wheels runs on an obstacle like a rock. Meanwhile, the yaw angle represents an amount of change in attitude around an axis in an up-down direction relative to the direction of travel of the mobile body 60. The yaw angle may be calculated in the case of detecting such a change in attitude. As described above, the attitude signal may be a signal that indicates at least one of the pitch angle, the roll angle, and the yaw angle. The attitude signal is sent to the low-pass filter 176A and the subtractor 178A.

### (Step S303)

The low-pass filter 176A extracts the low-frequency component, which is a component at frequencies lower than a preset cutoff frequency, from time-series data of the attitude signals generated until then and outputs the extracted component as the inclination signal. The cutoff frequency is set to an appropriate value depending on a traveling environment or usage of the mobile body 60. The cutoff frequency can be set to a value included in a range from 0.1 Hz to 10 Hz, for example. By setting the cutoff frequency in the aforementioned range, it is possible to effectively remove the component of the change in attitude attributed to the inclination of the road surface from the attitude signal.

### (Step S304)

The subtractor 178A generates the vibration signal by subtracting the inclination signal from the attitude signal, and outputs the generated signal to the control circuit 150.

The following is a reason why the vibration signal can be generated from the attitude signal by the processing from step S302 to step S304. In the case where the mobile body 60 such as the AGV travels indoors and outdoors along the road surface, the change in attitude associated with the following transition is mostly a change that is temporally slow (that is, containing a lot of low-frequency components) when the road surface transitions from a horizontal state to a slope and when the road surface transitions from the slope to the horizontal state. This is because the road surface is generally formed in such a way as to smoothen a boundary between a slope and a horizontal portion for the purpose of decreasing a shock when traveling on the boundary. Therefore, the inclination signal that contains a lot of the components of the change in attitude associated with the change in inclination angle of the road surface can be obtained by carrying out the low-pass filtering processing to extract the low-frequency signal from the attitude signal. The vibration signal that contains a lot of components of the change in attitude associated with the vibration is obtained by subtracting this inclination signal from the attitude signal.

### (Step S305)

Based on the vibration signal, the control circuit 150 corrects the control signal to define the direction of emission of the light beam determined in step S301. Note that the light beam does not have to be in the state of emission at this point. The control circuit 150 corrects the control signal to define the rotational angle of the mirror included in the actuator 124, the refraction index of the liquid crystal, and the like such that light beam is emitted in a supposed direction in the case of emitting the light beam. In the case where the control signal is corrected, the control circuit 150 sends out the corrected control signal to the actuator 124. In accordance with the corrected control signal, the actuator 124 performs adjustment such as setting the angle of the mirror to a desired angle by driving the motor, for example.

Now, specific examples of correction of the direction of emission of the light beam will be described with reference to Fig. 8A to Fig. 8C.

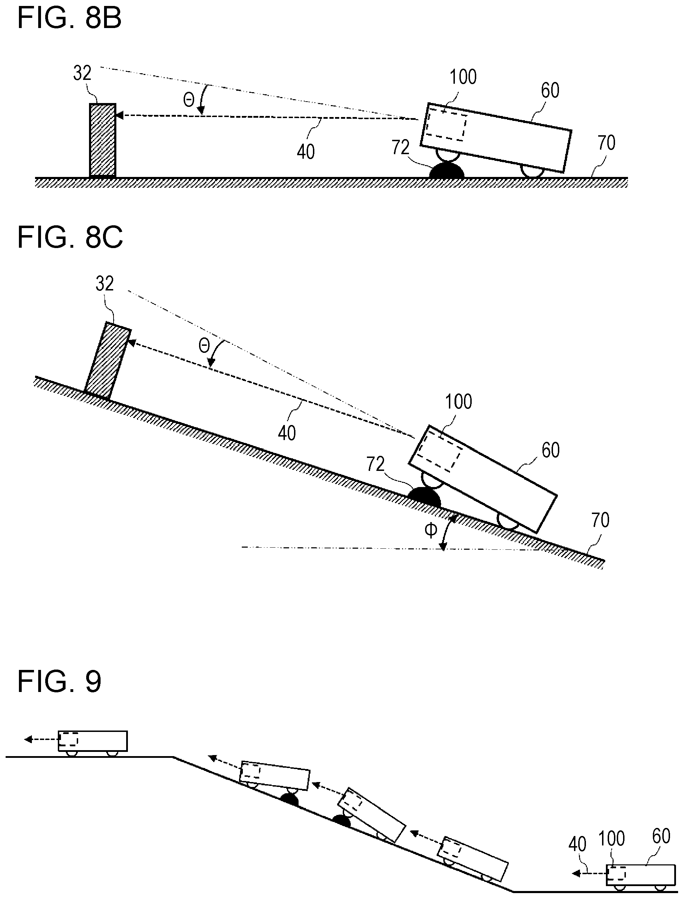

Fig. 8A shows an example of a state where the mobile body 60 is traveling on the horizontal road surface 70. Fig. 8B shows an example of a state where the mobile body 60 runs on a protrusion 72 on the horizontal road surface 70. Fig. 8C shows an example of a state where the mobile body 60 runs on the protrusion 72 on the inclined road surface 70. Here, for the sake of simplicity, a description will be given of an example in the case where the direction of emission of the light beam 40 determined in step S301 coincides with the frontal direction of the mobile body 60, or more specifically, the case where the emission angle with respect to the frontal direction is equal to zero degrees.

In the case where the mobile body 60 is traveling on the horizontal road surface 70 with no bumps as illustrated in Fig. 8A, the magnitude of the vibration signal is zero and the light beam 40 is emitted horizontally without correction of the direction of emission. Thus, the ranging apparatus 100 performs ranging of a target object 32 located ahead of the mobile body 60.

In the case where the mobile body 60 traveling on the horizontal road surface 70 runs on the protrusion 72 on the road surface 70 and causes the vibration as illustrated in Fig. 8B, a change in attitude at an angle θ concerning the pitch angle is detected as the vibration signal. The control circuit 150 corrects the direction of emission of the light beam 40 in such a way as to cancel out this change in attitude at the angle θ.

In the case where the mobile body 60 traveling on the inclined road surface 70 at an inclination angle φ runs on the protrusion 72 on the road surface 70 and causes the vibration as illustrated in Fig. 8C, the amount of change in attitude of the mobile body 60 is equivalent to an angle φ + θ relative to the horizontal plane. Of this angle, the value φ is obtained as an angle value of the inclination signal, and an angle value indicated by the vibration signal is therefore equal to θ. The control circuit 150 corrects the direction of emission of the light beam 40 in such a way as to cancel out this change in attitude at the angle θ.

### (Step S306)

The control circuit 150 sends out a light emission trigger signal to the light source 122. The light source 122 emits the light based on the light emission trigger signal. In the case of ranging in accordance with the ToF method, for example, the light source 122 emits pulsed light having a duration in a range from 1 ns to 100 ns, for example.

### (Step S307)

The light detector 140 detects reflected light from the target object and outputs a detection signal that indicates a result of detection.

### (Step S308)

The signal processing circuit 160 calculates a ranging value based on the detection signal. In the case where the distance is measured in accordance with the ToF method, for example, the ranging value is obtained from a time difference between timing of the emitted light pulse and timing of the reflected light pulse that is detected.

### (Step S309)

The signal processing circuit 160 outputs the ranging value. An output destination can be the storage device 180 or a display device such as a numerical value display unit or a display unit. Alternatively, the ranging value may be outputted to a control device or a computer configured to control the operation of the mobile body 60 based on the ranging value.

### (Step S310)

The control circuit 150 determines whether or not it is appropriate to terminate the ranging. In a case where the mobile body 60 arrives at a predetermined destination or the mobile body 60 is stopped due to a certain air, for example, the control circuit 150 determines that the ranging should be terminated and terminates the operations. In the case where the ranging is continued, the process returns to step S301 and the operations from step S301 to step S310 are repeated until determining that the ranging should be terminated.

According to the above-described operations, the mobile body 60 can accurately perform ranging while irradiating the target object, which is located ahead on the road surface, with the light beam precisely while removing the influence of the vibration at high accuracy irrespective of the state of inclination of the road surface or the presence of bumps thereon.

Fig. 9 is a diagram illustrating an example of the direction of emission of the light beam 40 in a case where the mobile body 60 of the present embodiment sequentially travels on a horizontal road surface, an uphill slope with bumps, and another horizontal road surface. In the present embodiment, unlike the example illustrated in Figs. 21A and 21B, the direction of emission of the light beam 40 is corrected based on the vibration signal obtained by removing the inclination component from the attitude signal. Thus, the light beam 40 can be emitted in an intended direction in the case of both the included surface and the road surface with bumps.

The configurations and the operations mentioned above are mere examples, and various modified examples of the present embodiment are conceivable. Some modified examples of the present embodiment will be described below.

In the example illustrated in Fig. 7, an amount of correction of the direction of emission is determined based on the vibration signal every time the light beam 40 is emitted. However, it is not always necessary to determine the amount of correction every time. In the case where the beam scanning is carried out, the light beam 40 may be emitted 1000 times or more in one second, for example. In this case, a frequency of emission of the light beam is equal to or above 1000 Hz, for instance. In contrast, a frequency of vibration attributed to bumps or steps on the road surface is generally lower than 1000 Hz. Accordingly, the calculation of the amount of correction for cancelling out the change in emission angle of the light beam 40 attributed to the vibration does not have to be carried out at a very high frequency, and may be carried out once in multiple times of emission of the light beam. In this case, the amount of correction once determined will be used for several times of emission until the next time of determination of the amount of correction.

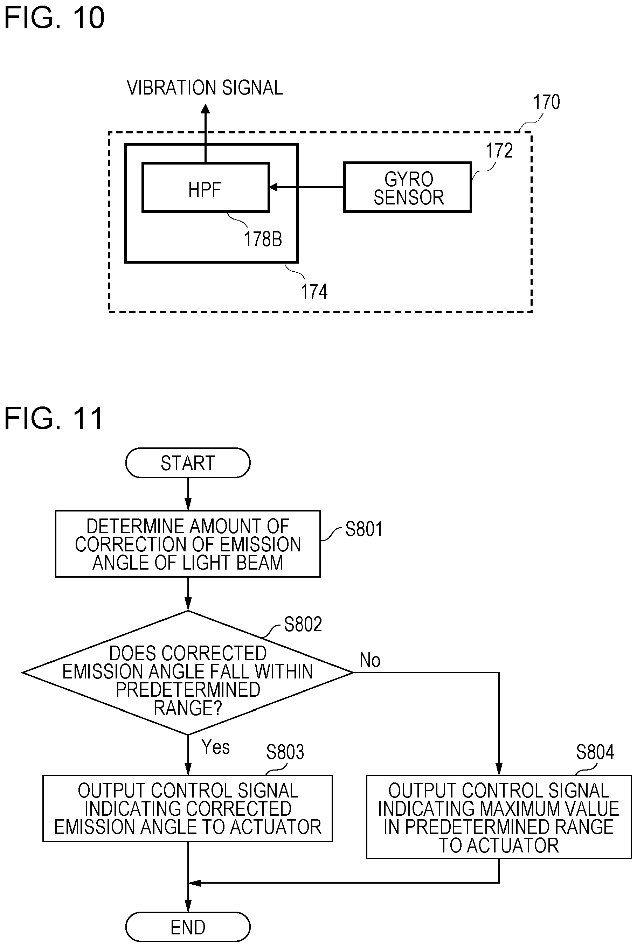

Fig. 10 is a diagram illustrating a modified example of the vibration detector 170. The arithmetic circuit 174 in the example illustrated in Fig. 10 includes a high-pass filter (HPF) 178B as the vibration detection module 178. Unlike the example illustrated in Figs. 1 and 6, the inclination detection module 176 is not provided. The attitude signal outputted from the gyro sensor 172A is sent out to the high-pass filter 178B. The high-pass filter 178B extracts a high-frequency component being a component having a frequency higher than the preset cutoff frequency, and outputs a signal indicating the component as the vibration signal. The cutoff frequency can be set to in the range from 0.1 Hz to 10 Hz, for example. The configuration illustrated in Fig. 10 can also generate the vibration signal equivalent to that generated by the configuration illustrated in Fig. 6, because if the same cutoff frequency and the same attenuation slope (that is, an inclination of an attenuation property of the filter) are applied to the low-pass filter and the high-pass filter, the signal calculated by subtracting the signal obtained by passing through the low-pass filter from the attitude signal is equivalent to the signal obtained by passing through the high-pass filter. Meanwhile, the mobile body is vibrating when traveling on the bumpy road surface, and a change in attitude associated with the vibration is mostly a change which is temporally fast (that is, containing a lot of high-frequency components). From this point of view, it is reasonable to use the signal obtained by passing the attitude signal through the high-pass filter as the vibration signal.

After obtaining the vibration signal, the control circuit 150 may adjust the control signal depending on the state of the mobile body 60 before sending out the control signal to the actuator 124. For example, the control circuit 150 may temporarily stop correction of the direction of emission of the light beam in a case where the magnitude of the vibration signal exceeds a preset range. Meanwhile, the control circuit 150 may temporarily stop correction of the direction of emission of the light beam in a case where the corrected emission angle of the light beam determined based on the vibration signal exceeds a preset range. An example of such operations will be described below.

Fig. 11 is a flowchart illustrating an example of operations to adjust the control signal. The operations illustrated in Fig. 11 can be executed instead of step S305 illustrated in Fig. 7, for example. Operations of the respective steps will be described below.

### (Step S801)

The control circuit 150 determines the amount of correction of the emission angle of the light beam in accordance with the same method as step S305.

### (Step S802)

The control circuit 150 determines whether or not the corrected emission angle falls within a predetermined range. For example, the control circuit 150 determines whether or not the corrected emission angle indicated by the control signal to be sent out to the actuator 124 falls within a range of the emission angle of the light beam controllable by the actuator 124.

### (Step S803)

When the corrected emission angle falls within the predetermined range, the control circuit 150 outputs the control signal indicating the emission angle to the actuator 124 without change.

### (Step S804)

In the case where the corrected emission angle is out of the predetermined value range, the control circuit 150 outputs a control signal indicating a maximum value that does not exceed the range to the actuator 124.

In the example illustrated in Fig. 11, in the case where the corrected emission angle determined so as to cancel out the influence of the change in attitude attributed to the vibration of the mobile body 60 exceeds the preset range of the emission angle of the light beam, the correction is stopped at the limit of that range. As a consequence of the above-mentioned operation, it is possible to suppress application of an excessive load to a driving mechanism (such as the motor) of the actuator 124 in case of the occurrence of unpredicted large vibration on the mobile body 60, thereby preventing the actuator 124 from breakage or deterioration. Here, the same determination may be conducted based on the vibration signal itself instead of based on the corrected emission angle. For example, the correction may be temporarily stopped in the case where the magnitude of the vibration signal exceeds a predetermined range.

The inclination detection module 176 illustrated in Fig. 1 generates the inclination signal by extracting the low-frequency component from the attitude signal. However, the inclination signal can also be generated not in accordance with the aforementioned method. For instance, the inclination signal may be generated based on a location estimated by a positioning device and on data that defines a correlation between a location prepared in advance and the inclination angle.

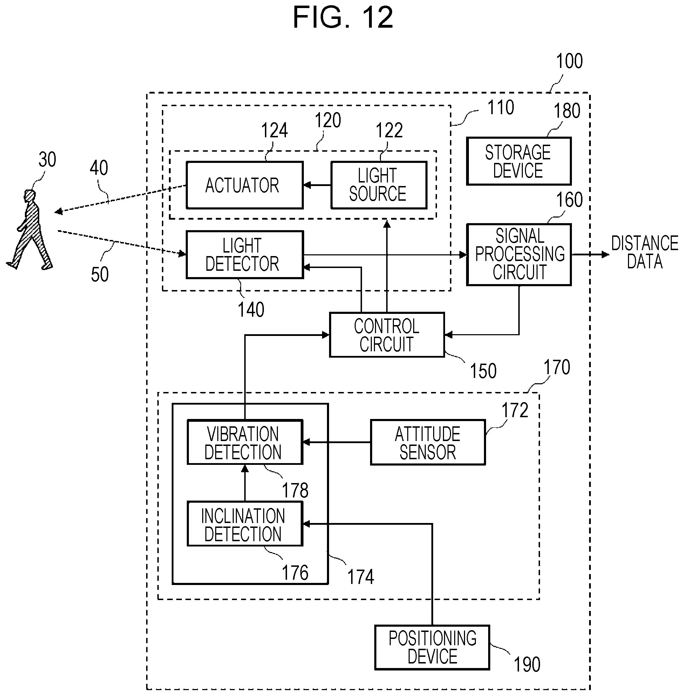

Fig. 12 is a block diagram illustrating a configuration example of the above-mentioned ranging apparatus 100. The ranging apparatus 100 in this example further includes a positioning device 190 in addition to the constituents illustrated in Fig. 1. Moreover, relation data that associates locations with information on the inclination angles of the ground surface at the locations and so forth is stored in the storage device 180 in advance. The relation data may be map data on the road surface in a zone where the mobile body 60 is likely to travel. The map data can be data to be stored while associating coordinates with slopes on the road surface. The positioning device 190 includes a GNSS receiver that receives signals from the GNSS satellite such as the GPS, and can obtain information on a current location of the ranging apparatus 100. The inclination detection module 176 in the arithmetic circuit 174 of this example can determine the inclination angle of the ground surface from the current location estimated by the positioning device 190 by referring to the relation data stored in the storage device 180, and determine the amount of change in attitude of the main body 110 attributed to the inclination of the ground surface based on the inclination angle. The inclination detection module 176 determines the inclination angle at the current location in consideration of the traveling direction of the mobile body 60 as needed due to the following reason. Specifically, even on the same slope, the inclination angle viewed from the mobile body 60 varies between the case of ascending the slope and the case of descending the slope. The vibration detection module 178 generates the vibration signal by subtracting the amount of change in attitude of the main body attributed to the inclination of the ground surface from the attitude signal.

The storage device 180 that stores the above-described relation data does not always have to be mounted on the mobile body 60. For example, a computer such as a server installed at a location distant from the mobile body 60 may store map information. In that case, the ranging apparatus 100 can obtain information on the inclined angle by wirelessly communicating the information with the computer such as the server.

In the configuration illustrated in Fig. 12, the positioning device 190 is not limited only to the one that uses the GNSS. For example, the positioning device 190 may carry our self-localization based on the distance data generated by the signal processing circuit 160. Meanwhile, it is also possible to estimate the inclination angle of the road surface at the current location by analyzing an image obtained with a camera or an image sensor not illustrated in Fig. 12.

In the case where the current location estimated by the positioning device 190 is included in a specific zone, the control circuit 150 may temporarily stop correction of the direction of emission of the light beam. In this case, the control circuit 150 determines whether or not the estimated current location corresponds to a preset specific location, and carries out the aforementioned correction of the direction of emission only in the case where the current location is included in this zone.

A place where large vibration is predicted to occur on the mobile body 60 can be set as the specific zone. For example, a boundary between a room and a corridor in a building, a boundary between the interior and the exterior, and a road surface which is not especially leveled, and the like can be included in the specific zone. Defining any of the aforementioned places as a specific location makes it possible to suppress application of an excessive load to the driving mechanism (such as the motor) of the actuator 124 in case of the occurrence of unpredicted large vibration on the mobile body 60, thereby preventing the actuator 124 from breakage or deterioration.

The specific location may be an indoor road surface (such as inside of a warehouse) which is constructed in consideration of flatness in particular. At such a location, it is possible to irradiate the target object with the light beam at sufficient accuracy without carrying out correction for compensating for the influence of the change in attitude attributed to vibration. By temporarily stopping the correcting operation at the specific location, it is possible to reduce energy consumption by the mobile body 60, and to extend operating time of the mobile body 60.

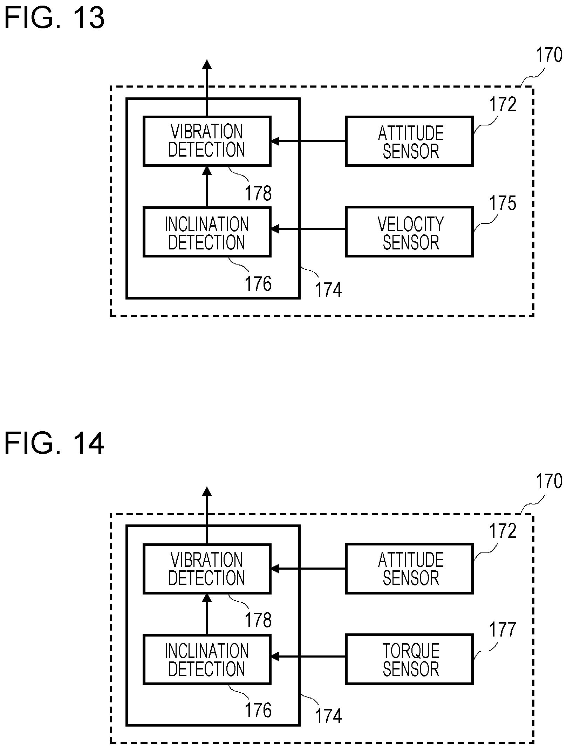

Fig. 13 is a diagram illustrating another example of the vibration detector 170. The vibration detector 170 in this example further includes a velocity sensor 175 that measures a moving velocity of the mobile body 60. The inclination detection module 176 in the arithmetic circuit 174 determines the component of the change in attitude attributed to the inclination of the ground surface based on the measured moving velocity. As described above, the inclination signal may also be generated from a traveling velocity of the mobile body 60. The velocity sensor 175 may include an encoder fitted to a motor for traveling or to a wheel which are provided to the mobile body 60. The encoder measures a rotating velocity of the motor or the wheel. The velocity sensor 175 can measure the velocity of the mobile body 60 by using the rotating velocity. The inclination detection module 176 converts the velocity of the mobile body 60 measured with the velocity sensor 175 into the inclination angle, and sends out the inclination angle as the inclination signal to the vibration detection module 178. In the case where the mobile body 60 travels by using the motor that is driven by constant torque, the velocity becomes slower on an uphill slope while the velocity becomes faster on a downhill slope. Meanwhile, the velocity has an intermediate value between these velocities on the horizontal road surface. The inclination signal can be generated from the traveling velocity as a consequence of associating the traveling velocity with the inclination angle by using the aforementioned properties.

Fig. 14 is a diagram illustrating still another example of the vibration detector 170. The vibration detector 170 in this example further includes a torque sensor 177. The torque sensor 177 measures torque of an electric motor that drives the mobile body 60. The inclination detection module 176 in the arithmetic circuit 174 determines the component of the change in attitude attributed to the inclination of the ground surface based on the measured torque. As described above, the inclination signal may also be generated from the torque during the travel of the mobile body 60. The torque sensor 177 includes a current sensor fitted to the motor for traveling, for example. The inclination detection module 176 converts the measured torque into the inclination angle, and sends out the inclination angle as the inclination signal to the vibration detection module 178. In the case where the motor is controlled such that the mobile body 60 travels at a constant velocity, the torque becomes larger on an uphill slope while the torque becomes smaller on a downhill slope. Meanwhile, the torque has an intermediate value between these values on the horizontal road surface. The inclination signal can be generated from the torque as a consequence of associating the torque with the inclination angle by using the aforementioned properties.

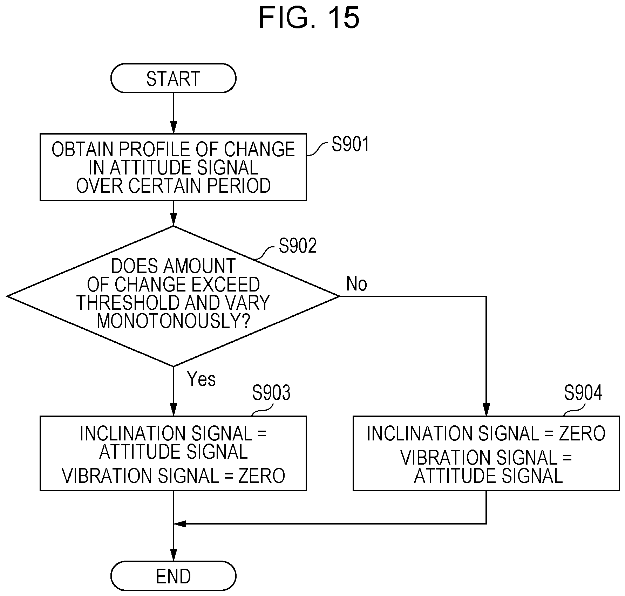

Fig. 15 is a flowchart showing another example of the method of generating the vibration signal from the attitude signal. In this example, operations in steps S901 to S904 are executed instead of steps S303 and S304 illustrated in Fig. 7.

### (Step S901)

The arithmetic circuit 174 obtains a profile of a change in attitude signal over a certain period from the storage device 180. The certain period can be a period from 0.5 second to 2 seconds, for example.

### (Step S902)

The vibration detection module 178 determines whether or not the amount of change in attitude exceeds a threshold and varies monotonously (that is, a monotonous increase or a monotonous decrease). Here, the vibration detection module 178 determines whether or not the amount of change in attitude in the certain period varies while having a tendency of any of the monotonous increase and the monotonous decrease as a whole in the certain period while ignoring a small variation in the amount of change in attitude. The threshold can be a value which is a half or more of an inclination angle of a slope that is present in the zone where the mobile body 60 is likely to travel, for example.

### (Step S903)

In the case where a result of determination in step S902 turns out to be yes, the vibration detection module 178 determines that the inclination signal is equal to the attitude signal and the magnitude of the vibration signal is equal to zero. Hence, the vibration detection module 178 outputs the vibration signal having the magnitude of zero.

### (Step S904)

In the case where the result of determination in step S902 turns out to be no, the vibration detection module 178 determines that the magnitude of the inclination signal is equal to zero and the vibration signal is equal to the attitude signal. Hence, the vibration detection module 178 outputs the attitude signal as the vibration signal without change.

As described above, in the example illustrated in Fig. 15, the arithmetic circuit 174 performs processing while considering that there is no change in attitude attributed to the vibration in the case where the amount of change in attitude signal in the certain period exceeds the threshold and varies while having the tendency of any of the monotonous increase and the monotonous decrease. On the other hand, in the case where the amount of change in attitude signal in the certain period does not exceed the threshold and the tendency of the variation in the amount of change in attitude is neither the monotonous increase nor the monotonous decrease, the arithmetic circuit 174 considers that there is no change in attitude attributed to the inclination and outputs the attitude signal as the vibration signal without change.

The following is a reason why the vibration component can be extracted by using the above-described method. In the case where the mobile body such as the AGV travels on the road surface indoors and outdoors, the change in inclination signal mainly occurs in a situation where the road surface transitions from a horizontal plane to a slope and in a situation where the slope transitions to the horizontal plane. This is because the continuous road surface is generally constructed in the form of joining the horizontal road surface to the road surface on the slope.

The amount of change in attitude signal is large in the situation of the transition as mentioned above, and the attitude signal tends to vary monotonously until the mobile body on the horizontal road surface completely enters the slope or the mobile body on the slope completely enters the horizontal road surface. On the other hand, regarding the change in attitude attributed to the vibration, the amount of change in attitude signal is relatively small and polarities of the change are switched in a relatively short time. As a consequence, the two conditions of the magnitude of the amount of change in the certain period and as to whether or not it is the monotonous change can be used as conditions for extracting the vibration component.

### (Second Embodiment)

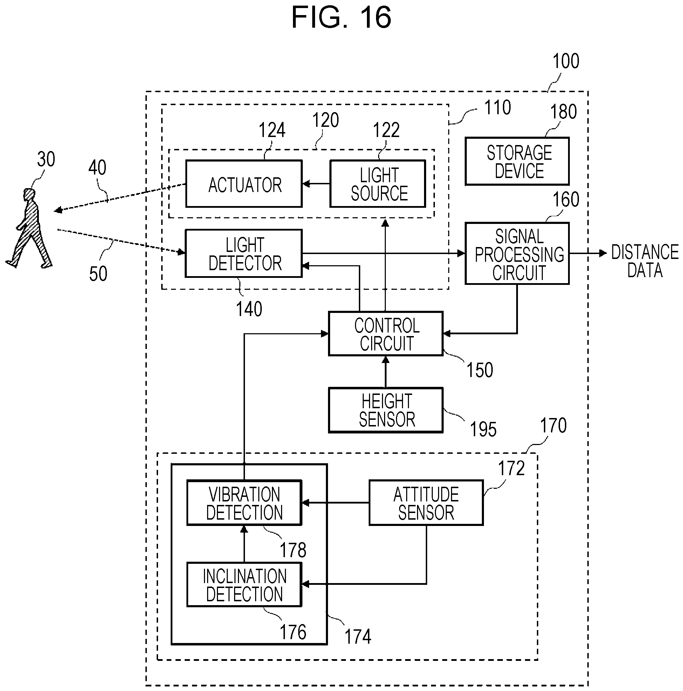

Fig. 16 is a block diagram illustrating a schematic configuration of the ranging apparatus 100 according to a second embodiment. This ranging apparatus 100 is different from the configuration illustrated in Fig. 1 in that the ranging apparatus 100 includes a height sensor 195. The height sensor 195 detects a change in height of the main body 110 from the ground surface and outputs a height change signal that indicates an amount of change in the height relative to a reference value. The control circuit 150 determines the amount of correction regarding the direction of emission of the light beam based on this height change signal and the vibration signal outputted from the arithmetic circuit 174.

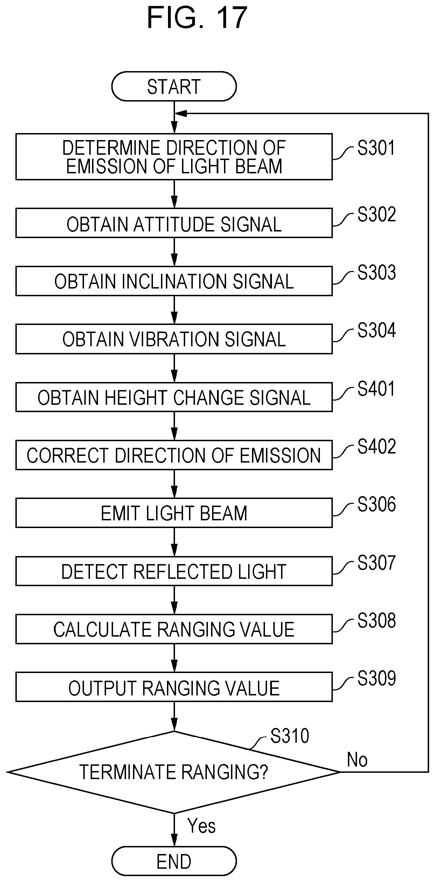

Fig. 17 is a flowchart illustrating operations of the present embodiment. In the present embodiment, steps S401 and S402 are executed instead of step S305 among the operations illustrated in Fig. 7. The rest of the steps are the same as the operations illustrated in Fig. 7. A description will be given below of features that are different from the operations illustrated in Fig. 7.

### (Step S401)

The height sensor 195 detects a change in height attributed to the bumps on the road surface, and outputs a signal indicating an amount of the change as the height change signal. The height sensor 195 includes an acceleration sensor and a circuit that processes a signal outputted from the acceleration sensor. In the case where the attitude sensor 172 includes the acceleration sensor, that acceleration sensor may be used instead. A raw measurement value obtained from the acceleration sensor represents an acceleration rate. Accordingly, the height sensor 195 calculates an amount of change in a direction perpendicular to the road surface by carrying out integral calculation.

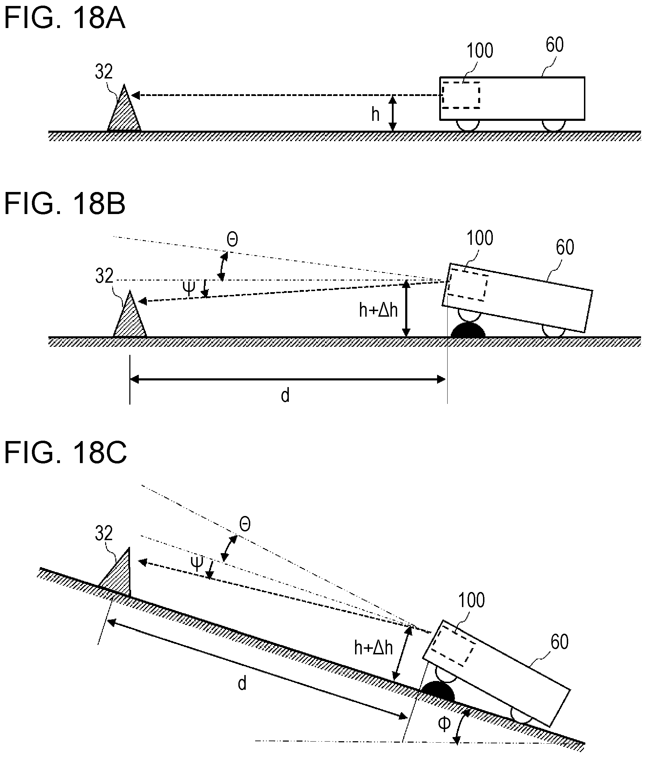

Figs. 18A to 18C are diagrams for explaining operations in the present embodiment. As illustrated in Fig. 18A, h is defined as a height from the road surface to a point of emission of the light beam in the state where the mobile body 60 is traveling on the horizontal road surface with no bumps. As illustrated in Fig. 18B, in a case where the mobile body 60 runs on a protrusion on the road surface, the height from the road surface to the point of emission of the light beam is measured as h + Δh, and a change in attitude at an angle θ is detected as the vibration signal.

### (Step S402)

The control circuit 150 corrects the direction of emission of the light beam based on the vibration signal and the height change signal. Here, if the direction of emission of the light beam is corrected based only on the vibration signal as with the first embodiment, the emission angle will be corrected only by θ in the pitch angle direction. However, since the height of the point of emission of the light beam is raised by Δh, the light beam may be deviated upward from the target object 32 in a case where a height of the target object 32 is slightly larger than h, and the ranging of the target object 32 may be infeasible.

Given the circumstances, the control circuit 150 of the present embodiment further corrects the emission angle of the light beam just by ψ in the pitch angle direction. Here, ψ = tan⁻¹(Δh/d) holds true. Here, d is a predicted distance to the target object 32. The predicted distance is obtained from a distance acquired when the same target object 32 has been measured very recently. Alternatively, the predicted distance may be the shortest distance in a case of carrying out a certain new action (such as a dodging action) when the mobile body 60 can measure the distance to the target object 32.

Correcting the direction of emission of the light beam in accordance with the above-described method makes it possible to obtain the distance data on the target object 32 located at the same height position as the case illustrated in Fig. 18A.

The vibration signal can be extracted from the attitude signal as with the first embodiment also in the case where the mobile body 60 runs on a protrusion on the inclined road surface as illustrated in Fig. 18C. The emission angle is corrected just by θ + ψ in the pitch angle direction in this case as well. Thus, it is possible to obtain the distance data on the target object 32 located at the same height position as the case illustrated in Fig. 18A.

As described above, the target object can be ranged by correcting the change in attitude attributed to the vibration more accurately regardless of whether the road surface is horizontal or inclined.

### (Third Embodiment)

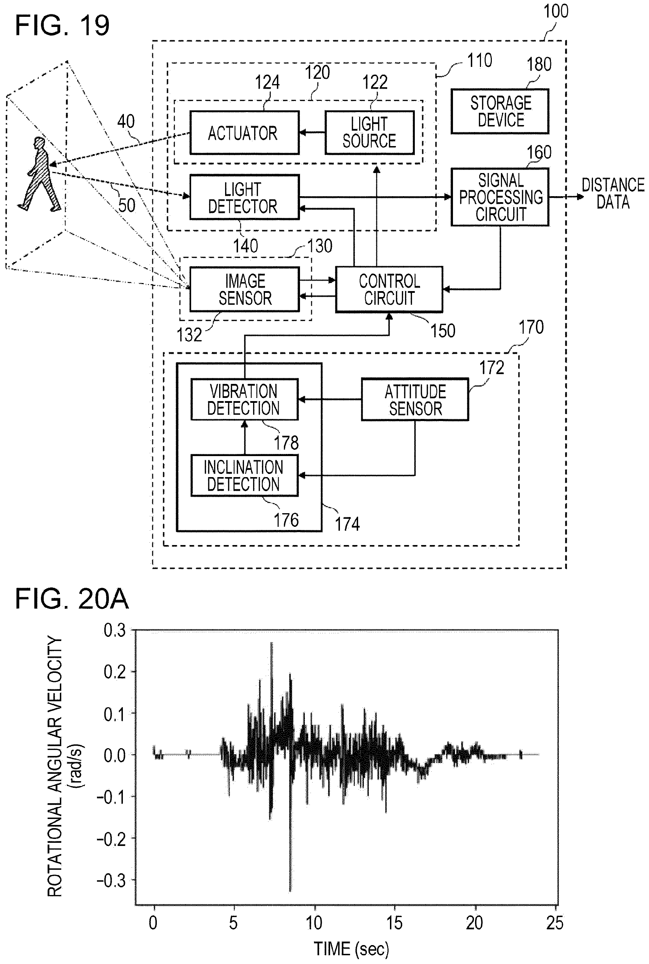

Fig. 19 is a block diagram illustrating a schematic configuration of the ranging apparatus 100 according to a third embodiment. This ranging apparatus 100 is different from the configuration illustrated in Fig. 1 in that the ranging apparatus 100 further includes a camera 130 that shoots a scene including a subject, and that the direction of emission of the light beam 40 is determined based on an obtained image. A description will be given below of features that are different from the first embodiment.

The camera 130 includes an image sensor 132. The image sensor 132 shoots a scene including a direction in which the light beam 40 is emitted. The image sensor 132 shoots a scene of a ranging target in response to an instruction from the control circuit 150. The image sensor 132 repeats shooting at a predetermined frame rate, thereby generating moving image data.

The control circuit 150 of the present embodiment recognizes at least one target object (such as another mobile object, a person, and an obstacle) included in the shot scene based on the image obtained by the image sensor 132. Then, based on a location where the target object is present in the image, the direction of emission of the light beam 40 is determined so as to irradiate the target object. The control circuit 150 sends out a control signal that indicates the determined direction of emission to the actuator 124. As with the first embodiment, the control circuit 150 corrects the direction of emission of the light beam 40 based on the vibration signal outputted from the vibration detection module 178.

According to the above-described configuration, the mobile body can precisely irradiate the target object with the light beam while removing the influence of the vibration at high accuracy irrespective of the state of inclination of the road surface or the presence of bumps thereon. Moreover, it is also possible to perform accurate ranging while tracking the target object.

In the respective embodiments described above, the light beam is emitted in a forward direction from the mobile body. However, the direction of emission is not limited only to the forward direction. The light beam may be emitted in a lateral direction or a rearward direction from the mobile body depending on the necessity of ranging. Meanwhile, other embodiments may be configured by combining the techniques explained regarding the above-described embodiments. The mobile body is not limited only to the AGV, but may be any mobile body that can mount the ranging apparatus.

### (Example)

A result of a preliminary test conducted in order to demonstrate the capability of extracting the inclination signal from the attitude signal will be described below.

In this test, a carriage mounting a gyro sensor was caused to travel on an outdoor asphalt road surface in such a way as to push the carriage while walking. Traveling time is set to 24 seconds. The road surface used for traveling is configured in the order of a horizontal plane (a length of 200 cm), an uphill slop (a length of 340 cm), and a horizontal plane (a length of 200 cm). However, there is a little variation of an inclination angle of the road surface depending on locations. An actually measured inclination angle of the uphill slope was around 3°.

Fig. 20A is a graph depicting a temporal change in rotational angular velocity in a pitch direction in the course of traveling, which was measured with the gyro sensor. An amplitude of the rotational angular velocity is increased at each time of a change in attitude of the carriage.

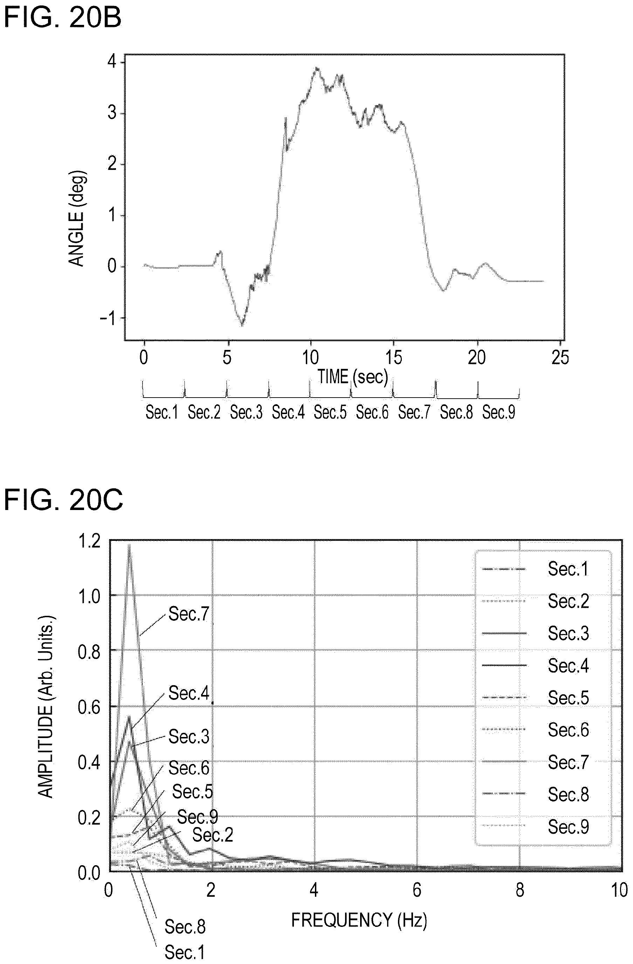

Fig. 20B is a graph depicting a temporal change in pitch angle calculated by integrating changes in rotational angular velocity. In this example, this signal corresponds to the attitude signal. As depicted in Fig. 20B, it is apparent that different inclination angles between each horizontal portion and the slope were successfully detected. However, this attitude signal also contains tiny fluctuation components due to the travel on the bumpy road surface.

Next, nine temporal sections were obtained in order to analyze this attitude signal. Each section has a length of 2.5 seconds. The respective sections are represented in the order of Sec. 1 (section 1), Sec. 2 (section 2), and so forth starting from the time at 0 second. Among the sections 1 to 9, the attitude signal is changed significantly in the sections 3, 4, and 7 in particular. The change in attitude due to the transition from the horizontal plane to the uphill slope is thought to occupy a major proportion in the section 4, while the change in attitude due to the transition from the uphill slope to the other horizontal plane is thought to occupy a major proportion in the section 7. The attitude is thought to have been changed in the section 3 because of the presence of a location that exhibits a small downhill slope in front of the uphill slope. In the meantime, it is apparent that the attitude signal is either monotonously increased or monotonously decreased at a relatively large range of variation in each of the sections 3, 4, and 7.

Fig. 20C is a graph depicting frequency spectra of the respective sections. It is apparent that the spectra of the sections 3, 4, and 7 are larger than the spectra of other sections by an amplitude of 1 Hz or less. Based on this result, the cutoff frequency of the low-pass filter for extracting the inclination signal was set to 1 Hz.

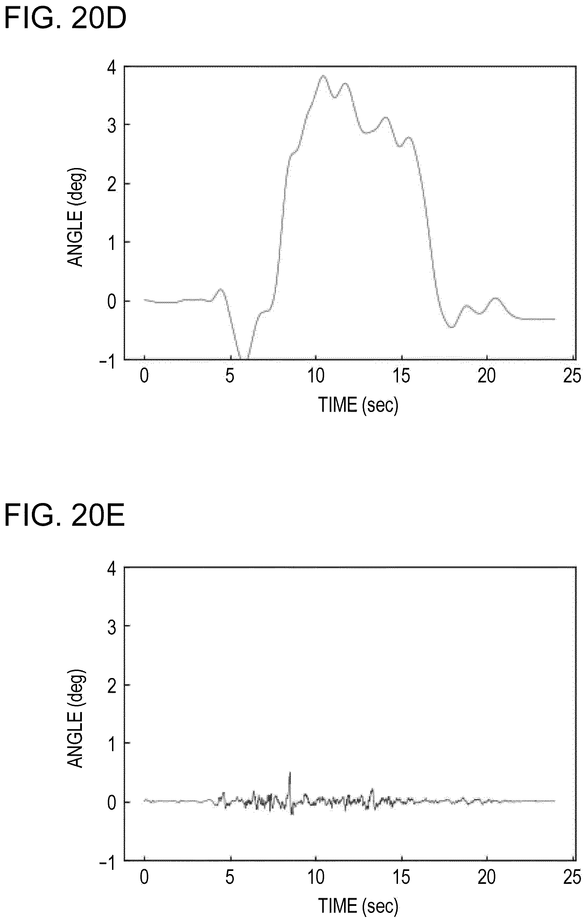

Fig. 20D is a graph depicting a result of obtaining the inclination signal by passing the attitude signal through the low-pass filter. Fig. 20E is a graph depicting a result of obtaining the vibration signal by subtracting the inclination signal from the attitude signal. From these results, it is apparent that a large component of variation attributed to the change in inclination of the road surface and a small component of variation due to the bumps on the asphalt road surface could be obtained separately.

Effectiveness of setting the cutoff frequency to a value close to 1 Hz has been confirmed from this example. It is therefore effective to set the cutoff frequency to a value close to 1 Hz, or a value in the range from 0.1 Hz to 10 Hz, for example.

### Industrial Applicability

The ranging apparatus according to the present disclosure can be used for applications such as a LiDAR system to be mounted on vehicles including an AGV (an automated guided vehicle), an automobile, and the like.

### Reference Signs List

30, 32 target object
40 light beam
50 reflected light
60 mobile body
70 road surface
72 protrusion
100 ranging apparatus
110 sensor main body
120 light emitting device
122 light source
124 actuator
125 motor
126 rotary mirror
127 half mirror
130 camera
132 image sensor
140 light detector
150 control circuit
160 processing circuit
170 vibration detector
172 attitude sensor
174 arithmetic circuit
175 velocity sensor
176 inclination detection module
177 torque sensor
178 vibration detection module
180 storage device
190 positioning device
195 height sensor

## Claims

1. A ranging apparatus comprising:
a main body including
a light emitting device being capable of emitting a light beam in a plurality of directions at different elevation angles, and
a light detector that detects reflected light of the light beam;
a signal processing circuit that generates distance data based on a signal outputted from the light detector;
a vibration detector that detects a change in attitude of the main body attributed to vibration in distinction from a change in attitude of the main body attributed to an inclination of a ground surface at a location where the main body is installed, and outputs a vibration signal indicating an amount of change in the attitude attributed to the vibration; and
a control circuit that corrects a direction of emission of the light beam to be emitted from the light emitting device based on the vibration signal.

2. The ranging apparatus according to claim 1, wherein
the light emitting device includes
a light source that emits the light beam, and
an actuator that changes the direction of emission of the light beam, and
the control circuit corrects the direction of emission of the light beam by controlling the actuator based on the vibration signal.

3. The ranging apparatus according to claim 1 or 2, wherein
the vibration detector includes
an attitude sensor that outputs an attitude signal indicating a variation with time of an attitude of the main body, and
an arithmetic circuit that generates the vibration signal by removing a component of the change in the attitude attributed to the inclination of the ground surface from the attitude signal.

4. The ranging apparatus according to claim 3, wherein the arithmetic circuit generates the vibration signal by extracting a high-frequency component being higher than a preset cutoff frequency from the attitude signal.

5. The ranging apparatus according to claim 4, wherein the arithmetic circuit generates the vibration signal by carrying out low-pass filtering processing to extract a low-frequency component being lower than the cutoff frequency from the attitude signal, and processing to remove the low-frequency component from the attitude signal.

6. The ranging apparatus according to claim 3 or 4, wherein the cutoff frequency is included in a range from 0.1 Hz and 10 Hz.

7. The ranging apparatus according to any one of claims 1 to 6, wherein the control circuit temporarily stops correction of the direction of emission of the light beam in a case where magnitude of the vibration signal exceeds a preset range.

8. The ranging apparatus according to claim 3, further comprising:
a positioning device that estimates a location of the ranging apparatus; and
a storage device that stores relation data that defines a correlation between the location of the ranging apparatus and an inclination angle of the ground surface, wherein
the arithmetic circuit
refers to the relation data and specifies the inclination angle of the ground surface from the location estimated by the positioning device,
determines an amount of change in the attitude of the main body attributed to the inclination of the ground surface based on the inclination angle, and
generates the vibration signal by subtracting the amount of change in the attitude of the main body attributed to the inclination of the ground surface from the attitude signal.

9. The ranging apparatus according to claim 8, wherein the control circuit temporarily stops correction of the direction of emission of the light beam in a case where the location estimated by the positioning device is included in a specific zone.

10. The ranging apparatus according to claim 3, wherein
the ranging apparatus is mounted on a mobile body,
the vibration detector further includes a velocity sensor that measures a moving velocity of the mobile body, and
the arithmetic circuit determines the component of the change in the attitude attributed to the inclination of the ground surface based on the measured moving velocity.

11. The ranging apparatus according to claim 3, wherein
the ranging apparatus is mounted on a mobile body driven by an electric motor,
the vibration detector further includes a torque sensor that measures torque of the electric motor, and
the arithmetic circuit determines the component of the change in the attitude attributed to the inclination of the ground surface based on the measured torque.

12. The ranging apparatus according to any one of claims 3 to 6 and 8 to 11, wherein
the ranging apparatus is mounted on a mobile body, and
the arithmetic circuit performs processing while considering that there is no change in the attitude attributed to the vibration in a case where an amount of change in the attitude signal in a certain period exceeds a threshold and varies while having a tendency of any of a monotonous increase and a monotonous decrease.

13. The ranging apparatus according to any one of claims 1 to 12, further comprising:
a height sensor that detects a change in height of the main body from the ground surface, and outputs a height change signal that indicates an amount of change in the height relative to a reference value, wherein
the control circuit determines an amount of correction of the direction of emission of the light beam based on the vibration signal and the height change signal.

14. The ranging apparatus according to any one of claims 1 to 13, further comprising:
an image sensor that shoots a scene including a direction in which the light beam is emitted, wherein
the control circuit recognizes at least one target object included in the scene based on an image obtained by the image sensor, and determines the direction of emission of the light beam so as to irradiate the at least one target object with the light beam.

15. A mobile body comprising:
the ranging apparatus according to any one of claims 1 to 14.

16. A computer program used in a ranging apparatus provided with
a light emitting device being capable of emitting a light beam in a plurality of directions at different elevation angles, and
a light detector that detects reflected light of the light beam,
wherein the computer program causes a computer in the ranging apparatus to execute:
generating distance data based on a signal outputted from the light detector;
detecting a change in attitude of the ranging apparatus attributed to vibration in distinction from a change in attitude of the main body attributed to an inclination of a ground surface at a location where the ranging apparatus is installed, and outputting a vibration signal indicating an amount of change in the attitude attributed to the vibration; and
correcting a direction of emission of the light beam to be emitted from the light emitting device based on the vibration signal.
